# EUROPÄISCHE PATENTANMELDUNG

(11) **EP 1 280 081 A1**
(43) Veröffentlichungstag der Anmeldung: **29.01.2003**
(21) Anmeldenummer: 01440239.0
(22) Anmeldetag: 26.07.2001
(51) Int. Cl.: G06F 17/60

(54) **Verfahren zum Erbringen eines Dienstes zur Organisation von Begegnungen für Teilnehmer eines Kommunikationsnetzes, sowie Kommunikationsnetz, Diensterechner und Programmmodul hierfür**

(71) Anmelder: ALCATEL, 75008 Paris (FR)
(72) Erfinder: Eisinger, Bernd, 3744 Stockern (AT)
(74) Vertreter: Rausch, Gabriele, Dr.

(57) **Zusammenfassung**

Verfahren zum Erbringen eines Dienstes zur Organisation von Begegnungen für Teilnehmer (SA, SB, SC) eines Kommunikationsnetzes (CN), wobei ein Diensterechner (MS) ein Begegnungsangebot mit mindestens einem Begegnungskriterium eines anbietenden Teilnehmers (SA) empfängt und speichert, der Diensterechner (MS) einen Begegnungswunsch mit mindestens einem Suchkriterium eines suchenden Teilnehmers (SB) empfängt, der Diensterechner (MS) solche Begegnungsangebote ermittelt, dessen Begegnungskriterien den übermittelten Suchkriterien entsprechen und für den Fall, dass ein oder mehrere Begegnungsangebote ermittelt werden, mindestens eines dieser Begegnungsangebote zusammen mit jeweils einer aktuellen Information über Teilnehmer, für welche Meldungen gespeichert sind, an den suchenden Teilnehmer (SB) übermittelt, der Diensterechner (MS) eine Teilnahmezusage des suchenden Teilnehmers (SB) zu einem ausgewählten Begegnungsangebot empfängt und die Teilnahmezusage dieses Teilnehmers (SB) als Meldung im Diensterechner (MS) speichert, sowie Kommunikationsnetz (CN), Diensterechner (MS) und Programmmodul hierfür.

## Beschreibung

Die Erfindung betrifft ein Verfahren zum Erbringen eines Dienstes zur Organisation von Begegnungen für Teilnehmer eines Kommunikationsnetzes nach dem Oberbegriff des Anspruchs 1, sowie ein Kommunikationsnetz, einen Diensterechner und ein Programmmodul zum Ablauf in einem Diensterechner hierfür.

Häufig werden Begegnungen oder Veranstaltungen mit hinreichender Vorlaufzeit und für einen festen Teilnehmerkreis geplant. Ein Teilnehmer, der eine Begegnung mit bestimmtem Personenkreis und möglicherweise bestimmtem Thema plant, wird die gewünschten Teilnehmer hinreichend früh informieren und einladen. Sofern ein unbestimmter Personenkreis erreicht werden soll, beispielsweise für eine kulturelle Veranstaltung, so kann diese Begegnung rechtzeitig beispielsweise in Printmedien oder auch im Internet bekannt gemacht werden.

Im Internet werden mittels sogenannter Suchmaschinen Dienste angeboten, die eine Suche nach bestimmten Informationen ermöglichen, welche in Form elektronischer Dokumente oder Internetseiten oder Webseiten (engl.: web pages) auf einer Vielzahl von Internetservern gespeichert sind. Dazu fordert ein (Internet-) Teilnehmer zunächst eine bestimmte Webseite einer ausgewählten Suchmaschine an. Als Antwort erhält er ein sogenanntes Formular, d.h. eine Webseite mit der Möglichkeit einer Eingabe von Suchkriterien. Der Teilnehmer füllt dieses Formular entsprechend aus, beispielsweise durch Freitexteingabe der Suchkriterien und/oder durch Auswählen vordefinierter Suchkriterien und sendet die ausgefüllte Webseite an die Suchmaschine zurück. Die Suchmaschine ermittelt dann ein Suchergebnis, erstellt eine entsprechende Ergebnisliste und übermittelt als Suchantwort diese Ergebnisliste an den Teilnehmer. Diese Ergebnisliste enthält beispielsweise eine Liste von Adressen gesuchter Webseiten, d.h. von Webseiten, welche den Suchkriterien entsprechen. Die genannten Adressen können in Form von IP-Adressen übergeben werden; häufig werden jedoch statt dessen diese IP-Adressen eindeutig kennzeichnende, lesbare Zeichenfolgen, sogenannte uniform ressource locations (URL) übergeben, beispielsweise für die Firma Alcatel die Zeichenfolge www.alcatel.com. Es ist jedoch heute kein Suchdienst dieser Art bekannt, welcher einem suchenden Teilnehmer aktuelle Information über Teilnehmer mit gleichen Suchanfragen zukommen lässt.

Die zunehmende Mobilität erfordert für viele Menschen einen häufigen Aufenthalt an fremden Orten. Für Teilnehmer eines Mobilfunknetzes besteht dennoch die Möglichkeit, jederzeit bequem mit anderen Teilnehmern zu kommunizieren. Jedoch dienen bekannte Dienste von Mobilfunknetzen und auch klassischer Fernsprechnetze in der Regel dazu, Kommunikationsverbindungen zu bekannten Teilnehmern oder bekannten Diensten herzustellen. Es besteht aber ein Bedürfnis, mittels moderner Kommunikationsmittel auch außerhalb bekannter Orte und außerhalb von dritten organisierter Veranstaltungen spontane soziale Kontakte mit gleichgesinnten Menschen begründen zu können.

Der Erfindung liegt die Aufgabe zugrunde, ein komfortables und transparentes Verfahren und die zu seiner Ausführung erforderlichen Mittel zum Erbringen eines Dienstes zur Organisation von Begegnungen zu schaffen.

Erfindungsgemäß wird diese Aufgabe durch ein Verfahren nach der Lehre des Anspruchs 1, ein Kommunikationsnetz nach der Lehre des Anspruchs 9, einen Diensterechner nach der Lehre des Anspruchs 10 und ein Programmmodul nach der Lehre des Anspruchs 11 gelöst.

Grundgedanke der Erfindung ist es, Begegnungsangebote mittels einer Einrichtung des Kommunikationsnetzes an begegnungssuchende Teilnehmer dieses Kommunikationsnetzes zu vermitteln. Dazu werden Begegnungsangebote von Begegnungen anbietenden oder initiierenden Teilnehmern jeweils mit mindestens einem eine Begegnung charakterisierenden Begegnungskriterium in den Diensterechner aufgenommen. Ein suchender Teilnehmer übermittelt einen Begegnungswunsch mit einem Suchkriterium oder mehrerer Suchkriterien an den Diensterechner. Der Diensterechner ermittelt solche Begegnungsangebote, dessen Begegnungskriterien den übermittelten Suchkriterien entsprechen und übermittelt für den Fall, dass ein oder mehrere Begegnungsangebote ermittelt wurden, mindestens eines dieser Begegnungsangebote zusammen mit jeweils einer aktuellen Information über Teilnehmer, insbesondere über Teilnehmer mit vorliegenden Teilnahmezusagen oder über anwesende Teilnehmer, beispielsweise die Anzahl jeweils dieser Teilnehmer, an den suchenden Teilnehmer. Der suchende Teilnehmer übermittelt dem Diensterechner schließlich eine Teilnahmezusage zu einem ausgewählten Begegnungsangebot, worauf Daten dieses Teilnehmers, insbesondere die Adresse oder Rufnummer, im Diensterechner gespeichert wird.

Weitere vorteilhafte Ausgestaltungen der Erfindung sind den abhängigen Ansprüchen und der Beschreibung zu entnehmen.

Im folgenden wird die Erfindung unter Zuhilfenahme der Zeichnung weiter erläutert:

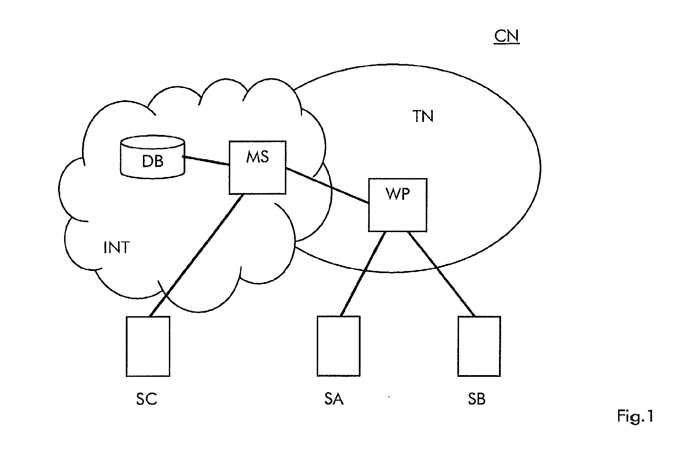

- Fig.1: zeigt schematisch ein erfindungsgemäßes Kommunikationsnetz zur Ausführung des erfindungsgemäßen Verfahrens.

Fig.1 zeigt ein Kommunikationsnetz CN, welches beispielhaft aus einem Fernsprechnetz (für mobile Kommunikation) TN und dem Internet INT besteht. Das Fernsprechnetz TN ist exemplarisch mit einem WAP- (Wireless Application Protocol) Server WP versehen. Weiter ist das Internet INT mit einem Diensterechner MS und einer Datenbank DB versehen. Weiter sind, exemplarisch dargestellt, ein erster (Dienste-) Teilnehmer SA und ein zweiter (Dienste-) Teilnehmer SB jeweils des Fernsprechnetzes TN eingezeichnet, welche mit dem WAP-Server WP über jeweils eine hier nicht dargestellte Funkstrecke verbunden sind. Ein exemplarisch dargestellter dritter Teilnehmer SC des Internets INT ist mit dem Diensterechner MS über einen hier nicht dargestelltes Internet-Zugangsnetz verbunden. Der Diensterechner MS weist weiter jeweils eine Verbindung zum WAP-Server WP und zur Datenbank DB auf.

Das Internet INT umfasst sämtliche miteinander verbundenen Netze, die mittels des Internet Protokolls (IP) kommunizieren. Nach dieser Definition werden hier auch abgetrennte Netze, sogenannte Intranets, als Teil des Internets angesehen. Das sogenannte World Wide Web (WWW) umfasst alle diejenigen Einrichtungen des Internets, die sogenannte HTML-Seiten (Hypertext Markup Language), im folgenden auch kurz Webseiten genannt, mittels bestimmter Anwendungsprotokolle, in der Regel mittels des sogenannten Hypertext Transfer Protokolls (HTTP) als sogenannter Verarbeitungs-Protokollschicht (engl.: application layer) oberhalb der Protokollschichten der sogenannten TCP/IP (Transfer Control Protocol/Internet Protocol) Protokollfolge (engl.: protocol suite) austauschen. Die gesamten oben genannten Protokollschichten zur Übertragung von Webseiten im Internet sollen im folgenden einfach als HTTP/TCP/IP Protokollfolge bezeichnet werden.

Bei dem Diensterechner MS handelt es sich um einen sogenannten Internetserver oder WWW- (World Wide Web) Server, welcher mittels des Hypertext Transfer Protokolls (HTTP) mit weiteren an das Internet angeschlossenen Internet-Endgeräten, hier beispielhaft durch den dritten Teilnehmer SC repräsentiert, oder weiteren Netzservern kommuniziert, d.h. Webseiten austauscht. Der Diensterechner MS erzeugt zur Kommunikation mit einem Teilnehmer SA, SB oder SC bestimmte Webseiten, sogenannte Formulare, welche bestimmte Eingabefelder aufweisen, welche der entsprechende Teilnehmer mit Information ausfüllen kann. Die eingetragene Information (nicht die gesamte Webseite) wird durch Quittierung, beispielsweise durch betätigen der "Return-Taste" oder durch anwählen oder anklicken einer dafür vorgesehenen Bildschirmschaltfläche, zurück an den Diensterechner MS übermittelt. Der Diensterechner MS weist über die beschriebene Kommunikationsfunktion hinaus auch Funktionen zur Dienstesteuerung, zur Verwaltung und zur Speicherung relevanter Daten des erfindungsgemäßen Verfahren zum Erbringen eines Dienstes zur Organisation von Begegnungen auf, im folgenden kurz Begegnungsdienst (engl.: meeting service) genannt. Die Daten werden vorzugsweise in der Datenbank DB gespeichert. Der Diensterechner MS kann aus einem zentralen Rechner oder Rechnerverbund oder aus mehreren dezentralen miteinander kommunizierenden Rechnern bestehen. Insbesondere können die verschiedenen beschriebenen Aufgaben, beispielsweise die Dienstesteuerung, die Datenverwaltung und die Webseitenkommunikation auch physikalisch verschiedenen Rechnern zugewiesen werden.

Der dritte Teilnehmer SC wird beispielsweise durch einen PC (Personal Computer) realisiert, welcher einen sogenannten WWW-Browser aufweist, d.h. Programmmittel zur Ausführung der oben genannten Protokolle und zur Darstellung und Bearbeitung von Webseiten auf einem Bildschirm. Zum Aufrufen einer Webseite des Diensterechners MS übermittelt der dritte Teilnehmer SC eine diese Webseite identifizierende eindeutige Adresse, auch "unified ressource location" (URL) genannt, oder einen eindeutig damit verknüpften Namen.

Das Fernsprechnetz TN stellt ein WAP-fähiges Mobilfunknetz dar, beispielsweise ein Mobilfunknetz nach dem weit verbreiteten GSM-Standard (engl.: Global System for Mobile Communication). Das oben genannte Wireless Application Protocol (WAP) beschreibt eine Protokollfolge, welche der Kommunikation sogenannter WAP-Seiten zwischen einem WAP-Server und einem WAP-Endgerät, d.h. einem Mobilfunkendgerät mit einem sogenannten WML-Browser (WML = Wireless Mark-up Language) dient. Das Wireless Application Protocol (WAP) oder die WAP-Protokollfolge ist ähnlich wie die oben beschriebenen Internetprotokolle (HTML, HTTP, TCP/IP) in verschiedene Protokollschichten unterteilt. Das Wireless Application Protocol (WAP) und die entsprechenden WAP-Seiten sind speziell für die Mobilfunkübertragung und zur Darstellung auf (kleinen) Mobilfunkendgeräten angepasst. Beispielsweise enthalten WAP-Seiten keine Bilddarstellungen. Die Teilnehmer SA und SB stellen Mobilfunk-Endgeräte dar, welche jeweils einen sogenannten WAP-Browser aufweisen. Die Kommunikation mittels WAP-Seiten ist aus Anwendersicht weitgehend identisch mit der vorhin beschriebenen Kommunikation im Internet mittels Webseiten. Im folgenden soll davon ausgegangen werden, dass der Diensterechner MS Webseiten generiert, die zugleich als WAP-Seiten dargestellt werden können. Der WAP-Server dient dann ausschließlich der Protokollumsetzung von der HTML/TCP/IP Protokollfolge zur WAP-Protokollfolge und umgekehrt, d.h. als Schnittstelle oder Gateway zwischen dem sogenannten "World Wide Web" und dem WAP-fähigen Mobilfunknetz.

Im Folgenden soll ein einfacher funktionaler Kommunikationsablauf zur Einrichtung eines Begegnungsangebots und zur Bearbeitung eines Begegnungswunsches im Rahmen des erfindungsgemäßen Verfahrens beschrieben werden. Der Ablauf lässt sich dabei in zwei Teilen darstellen:
1. Aufnahme eines Begegnungsangebots:
   - Der erste Teilnehmer SA sendet eine Anfrage an den Diensterechner MS zur Einrichtung eines Begegnungsangebots,
   - Der Diensterechner MS übermittelt ein Formular zur Eingabe von Begegnungskriterien für das abzugebende Begegnungsangebot, in welches beispielsweise der Begegnungsort und die Zeit (Beginn oder Zeitspanne) eingetragen werden müssen, eine Kategorie aus einem Katalog mit mehreren vordefinierten Kategorien ausgewählt werden muss und weitere Angaben als Freitext optional eingetragen werden können,
   - der erste Teilnehmer füllt das genannte Formular aus und sendet es zum Diensterechner MS,
   - der Diensterechner MS prüft das erhaltene Formular, nimmt, bei positivem Prüfergebnis, dieses Begegnungsangebot mit den eingegebenen Informationen auf, und informiert den ersten Teilnehmer SA.
2. Aufnahme eines Begegnungswunsches:
   - Der zweite Teilnehmer SB sendet eine Anfrage an den Diensterechner MS zur Abgabe eines Begegnungswunsches,
   - der Diensterechner MS übermittelt ein Formular zur Eingabe von Suchkriterien für den abzugebenden Begegnungswunsch, in welches beispielsweise die Zeit oder ein Zeitraum und ein Ortsbereich eingetragen werden müssen und eine oder mehrere Kategorien aus einem Katalog mit mehreren vordefinierten Kategorien ausgewählt werden können,
   - der zweite Teilnehmer SB füllt das genannte Formular aus und sendet es zum Diensterechner MS,
   - der Diensterechner MS ermittelt solche Begegnungsangebote, dessen Begegnungskriterien den übermittelten Suchkriterien entsprechen, wobei eine Entsprechung beispielsweise darin bestehen kann, dass alle oder bestimmte Suchkriterien (beispielsweise Orts- und Zeitkriterium) mit den entsprechenden Begegnungskriterien übereinstimmen oder die Suchkriterien von den Begegnungskriterien abgedeckt werden,
   - für den Fall, dass ein oder mehrere passende Begegnungsangebote gefunden wurden, werden diese oder eines dieser Begegnungsangebote mit jeweils den entsprechenden Begegnungskriterien und einer aktuellen Information über Teilnehmer, beispielsweise die Anzahl der Teilnehmer, die bisher zugesagt und nicht wieder abgesagt haben und/oder eine Liste dieser Teilnehmer mit ihren Rufnummern, an den zweiten Teilnehmer übermittelt,
   - der zweite Teilnehmer SB wählt ein Begegnungsangebot aus und übermittelt meldet dem Diensterechner MS eine Meldung in Form einer Teilnahmezusage und
   - der Diensterechner MS speichert die Meldung dieses Teilnehmers SB.

Die zu speichernden Daten des Teilnehmers SB bestehen im einfachsten Fall alleine aus der Teilnahmezusage. In diesem Fall wird allein die aktuelle Teilnehmerzahl, d.h. die aktuelle Anzahl von Zusagen gezählt und als Teilnehmerinformation jeweils den weiteren suchenden Teilnehmern mitgeteilt. Vorzugsweise werden jedoch zusätzliche Daten gespeichert, beispielsweise der Name, die Rufnummer oder (Netz-) Adresse des Teilnehmers und weitere Angaben zu der jeweiligen Person. Diese Information wird in Form einer Tabelle als Teilnehmerinformation mitgeteilt. Die Bedieneroberfläche kann so ausgelegt sein, dass ein Tastendruck des suchenden Teilnehmers genügt, um eine Verbindungsherstellung mit einem ausgewählten weiteren Teilnehmer einzuleiten.

In einer weiteren Ausführung wird für den Fall, dass für den Begegnungswunsch des zweiten Teilnehmers SB kein entsprechendes Begegnungsangebot ermittelt werden kann, mit diesem Begegnungswunsch unmittelbar ein Begegnungsangebot begründet. Dazu übermittelt der Diensterechner MS dem zweiten Teilnehmer mit dem Suchergebnisses eine entsprechende Option (ein gegebenenfalls zu markierendes Feld mit der Frage, ob die Begründung eines Begegnungsangebots gewünscht wird) und gegebenenfalls eine Aufforderung, noch fehlende Information, beispielsweise den genauen Ort und den Begegnungszeitraum zu übermitteln.

In einer weiteren Ausführung wird ein im Diensterechner MS gespeichertes Begegnungsangebot automatisch gelöscht, wenn ein bestimmtes Zeitkriterium erfüllt ist. Als Zeitkriterium kann der Anbruch des auf die Begegnung folgenden Tages dienen. Alternativ kann der erste Teilnehmer SA bei der Eingabe der Begegnungskriterien auffordert werden, den Zeitpunkt des (voraussichtlichen) Endes einzugeben. Als Zeitkriterium kann dann dieser Zeitpunkt oder ein um eine bestimmte Zeit von diesem Zeitpunkt verschobener Zeitpunkt dienen.

Teilnehmer eines zellularen Mobilfunknetzes, beispielsweise des GSM-Netzes, werden kontinuierlich geortet. Sobald ein Teilnehmer einen sogenannten geografischen Bereich des Netzes verlässt und in einen neuen geografischen Bereich eintritt, wird dieser Teilnehmer und der neue geografische Bereich in einer sogenannten Besucherdatei (engl.: Visitors Location Register, VLR) vermerkt. Darüber hinaus sind Verfahren bekannt, bei denen eine wesentlich genauere Ortung über die Ortung eines geographischen Bereiches hinaus ermöglicht wird, z.B. mit Hilfe von Feldstärkemessungen der vom mobilen Endgerät empfangenen Funksignale. Alternativ kann eine genaue Teilnehmerortung auch mittels des bekannten sogenannten Global Positioning Systems (GPS) durchgeführt werden. Die Teilnehmerortung wird in einer weiteren Ausführung dazu genutzt, festzustellen, ob ein Teilnehmer, welcher einer Begegnung zugesagt hat, an dem Begegnungsort anwesend ist oder einen bestimmten Ortsbereich erreicht. Weiter kann damit festgestellt werden, wenn ein Teilnehmer, der den Begegnungsort einmal erreicht hat, diesen Ort wieder verlässt. Diese Information wird dem Diensterechner MS gemeldet. Die an den suchenden, zweiten Teilnehmer SB übermittelte Teilnehmerinformation enthält dann zusätzlich die Anzahl der am Begegnungsort anwesenden Teilnehmer und optional eine Liste dieser Teilnehmer. Alternativ können die Meldungen über An- und Abwesenheit auch manuell vom zweiten Teilnehmer SB an den Diensterechner MS übermittelt werden.

Grundsätzlich können alle Teilnehmer SA, SB und SC jeder Zeit Kontakt zum Diensterechner aufnehmen, um sich über den Stand (z.B. Teilnehmerzahl und Teilnehmerliste) einer Begegnung zu informieren, beispielsweise durch eine erneute Suchanfrage. Es ist alternativ möglich, dass die Teilnehmer einer Begegnung in bestimmten Zeitabständen über diesen Stand informiert werden. Zu einer bestimmten Zeit vor einer Begegnung kann eine Erinnerungsmeldung und eine Information zum Auffinden des Begegnungsorts an die Teilnehmer übermittelt werden. Für den Fall, dass ein Teilnehmer geortet wird, kann dieser Teilnehmer aktuelle Navigationsinformation, d.h. eine Route abhängig von seinem aktuellen Ort und abhängig von einem ausgewählten Verkehrsmittel erhalten.

In einer weiteren Ausführung können Teilnehmer, für welche eine Teilnahmebestätigung für eine Begegnung im Diensterechner gespeichert ist, aus der Liste der Teilnehmer wieder gelöscht werden. Dieses Löschen kann explizit infolge einer Information des betroffenen Teilnehmers an dem Diensterechner erfolgen. Das Löschen kann auch nach der Feststellung erfolgen, dass ein Teilnehmer den einmal erreichten Begegnungsort verlassen hat. Vorteilhafterweise wird das Löschen in diesem Fall erst ab Beginn der Begegnung durchgeführt, um beispielsweise bei einer Vorbesichtigung des Treffpunktes ein Löschen einer Teilnahmezusage zu vermeiden.

Zusätzlich zum oben genannten Inhalt der Teilnehmerinformation, beispielsweise die Anzahl der Teilnahmezusagen, die Anzahl der anwesenden Teilnehmer und die entsprechenden Teilnehmerlisten kann diese Teilnehmerinformation auch weitere Information enthalten, beispielsweise besondere Interessen der Teilnehmer. Zur Aufnahme dieser Information von den begegnungssuchenden Teilnehmern kann ein entsprechendes Freitextfeld für das Eingabeformular vorgesehen werden.

Bei einer alternativen Ausführung für ein erfindungsgemäßes Kommunikationsnetz CN wird die Funktionalität des WAP-Servers WP erweitert. Der WAP-Server WP kommuniziert mit den Teilnehmern SA und SB eigenständig mittels WAP-Seiten, während zwischen dem WAP-Server WP und dem Diensterechner MS im wesentlichen nur Nutzdaten, d.h. für den Dienst relevante Daten ohne Daten, auf Basis der TCP/IP Protokollfolge ausgetauscht werden. Information, die nur der Menuführung der Teilnehmer dienen können lokal vom WAP-Server generiert werden. Weiter kann ein zusätzlicher Internetserver vorgesehen werden, welche analog zum genannten WAP-Server der Kommunikation des dritten Teilnehmers SC mittels Webseiten dient. Auch dieser Internetserver tauscht mit dem Diensterechner MS im wesentlichen nur Nutzdaten aus. Die Generierung der Webseiten mit der vom Diensterechner MS erhaltenen Information sowie die Extraktion von Nutzinformation aus von den Teilnehmern erhaltenen Webseiten wird von diesem Internetserver durchgeführt. Der Diensterechner MS ist dann im wesentlichen nur für die Steuerung des Dienstes, die Speicherung relevanter Daten und das Ermitteln von Begegnungsangeboten zuständig.

In einer alternativen Ausführung des erfindungsgemäßen Verfahrens wird die Teilnahme am Begegnungsdienst auch Teilnehmern ohne WAP-Zugang und ohne Internetzugang ermöglicht. Dem Begegnungsdienst wird dann eine bestimmte Dienste-Rufnummer zugeordnet. Bei einen Anruf mit dieser Dienste-Rufnummer, beispielsweise initiiert durch den zweiten Teilnehmers SB, wird eine Verbindung des zweiten Teilnehmers SB zu einem Sprachserver hergestellt, welcher die in Sprachform übermittelten Suchkriterien aufnimmt, mittels einer sogenannten speech-to-text-Umwandlung in digitale Information übersetzt und diese Information an den Diensterechner MS übermittelt. Die vom Diensterechner MS ermittelten Begegnungsangebote werden dem Sprachserver übermittelt, welcher diese Information mittels einer sogenannten text-to-speech-Umwandlung in Sprache umwandelt und die entsprechende Sprachinformation zum zweiten Teilnehmer übermittelt. Die Steuerung dieses Dienstes kann beispielsweise durch einen sogenannten Service Control Point (SCP) des Mobilfunknetzes oder des dem herkömmlichen Fernsprechnetz überlagerten Intelligenten Netzes realisiert werden.

## Patentansprüche

1. Verfahren zum Erbringen eines Dienstes zur Organisation von Begegnungen für Teilnehmer (SA, SB, SC) eines Kommunikationsnetzes (CN), **dadurch gekennzeichnet, dass** es folgende Schritte aufweist:
• ein Diensterechner (MS) empfängt und speichert ein oder mehrere Begegnungsangebote eines anbietenden oder anbietender Teilnehmer (SA) mit jeweils mindestens einem Begegnungskriterium,
• der Diensterechner (MS) empfängt einen Begegnungswunsch mit mindestens einem Suchkriterium eines suchenden Teilnehmers (SB),
• der Diensterechner (MS) ermittelt solche Begegnungsangebote, dessen Begegnungskriterien den übermittelten Suchkriterien entsprechen und übermittelt für den Fall, dass ein oder mehrere Begegnungsangebote ermittelt werden, mindestens eines dieser Begegnungsangebote zusammen mit jeweils einer aktuellen Information über Teilnehmer dieser Begegnung, für welche Meldungen gespeichert sind, an den suchenden Teilnehmer (SB),
• der Diensterechner (MS) empfängt eine Teilnahmezusage des suchenden Teilnehmers (SB) zu einem ausgewählten Begegnungsangebot und
• die Teilnahmezusage dieses Teilnehmers (SB) wird als Meldung im Diensterechner (MS) gespeichert.

2. Verfahren nach Anspruch 1, **dadurch gekennzeichnet, dass** mit der Teilnahmezusage zusätzliche Daten des suchenden Teilnehmers (SB), insbesondere seine Rufnummer oder Adresse, unter der er über das Kommunikationsnetz (CN) erreicht werden kann, im Diensterechner (MS) gespeichert wird und dass die aktuelle Information über Teilnehmer die entsprechenden gespeicherten Daten enthält.

3. Verfahren nach Anspruch 1, **dadurch gekennzeichnet, dass** der Diensterechner (MS) für den Fall, dass für den Begegnungswunsch des suchenden Teilnehmers (SB) kein entsprechendes Begegnungsangebot ermittelt werden kann, eine Aufforderung von diesem Teilnehmer (SB) empfängt, diesen Begegnungswunsch als Begegnungsangebot zu speichern.

4. Verfahren nach Anspruch 1, **dadurch gekennzeichnet, dass** ein im Diensterechner (MS) gespeichertes Begegnungsangebot automatisch gelöscht wird, wenn bestimmte Kriterien erfüllt sind.

5. Verfahren nach Anspruch 1, **dadurch gekennzeichnet, dass** der Diensterechner (MS) eine Meldung empfängt, dass der suchende Teilnehmer (SB) am Begegnungsort anwesend ist.

6. Verfahren nach Anspruch 1, **dadurch gekennzeichnet, dass** der suchende Teilnehmer (SB) zur Feststellung seiner Anwesenheit am Begegnungsort geortet wird und die Information über seine Anwesenheit dem Diensterechner (MS) gemeldet wird.

7. Verfahren nach Anspruch 6, **dadurch gekennzeichnet, dass** der Teilnehmer (SB) Navigationsinformation zum Erreichen des Begegnungsorts erhält.

8. Verfahren nach Anspruch 1, **dadurch gekennzeichnet, dass** der suchende Teilnehmer (SB) aus einer Liste von Teilnehmern im Diensterechner (MS) gelöscht wird, wenn er eine zugesagte Begegnung absagt oder das Ende seiner Anwesenheit am Begegnungsort festgestellt wird.

9. Kommunikationsnetz (CN) zum Erbringen eines Dienstes zur Organisation von Begegnungen für Teilnehmer (SA, SB, SC) mit folgenden Mitteln:
• Empfangsmittel zum Empfang von Begegnungsangeboten mit mindestens einem Begegnungskriterium, Begegnungssuchen mit mindestens einem Suchkriterium und Meldungen,
• Speichermittel zum Speichern von Begegnungsangeboten und Teilnahmezusagen,
• Suchmittel zum Ermitteln von geeigneten gespeicherten Begegnungsangeboten für eine empfangene Begegnungssuche,
• Erstellungsmittel zur Erstellung einer Information über mindestens einem Begegnungsangebot und einer aktuellen Information über Teilnehmer dieser Begegnung, soweit mindestens Begegnungsangebot ermittelt wurde, und
• Sendemittel zum Senden der genannten Information an den suchenden Teilnehmer (SB).

10. Diensterechner (WS) zum Erbringen eines Dienstes zur Organisation von Begegnungen für Teilnehmer (SA, SB, SC) eines Kommunikationsnetzes (CN), mit folgenden Mitteln:
• Verbindungsmittel zum Herstellen einer Kommunikationsverbindung mit Teilnehmern (SA, SB, SC),
• Empfangsmittel zum Empfang von Begegnungsangeboten mit mindestens einem Begegnungskriterium, Begegnungssuchen mit mindestens einem Suchkriterium und Meldungen,
• Speichermittel zum Speichern von Begegnungsangeboten und Meldungen,
• Suchmittel zum Ermitteln von geeigneten gespeicherten Begegnungsangeboten für eine empfangene Begegnungssuche,
• Suchmittel zum Ermitteln von geeigneten gespeicherten Begegnungsangeboten für eine empfangene Begegnungssuche,
• Erstellungsmittel, zur Erstellung einer Information über mindestens ein Begegnungsangebot mit einer aktuellen Information über Teilnehmer dieser Begegnung für welche Meldungen vorliegen, soweit mindestens ein geeignetes Begegnungsangebot ermittelt wurde, und
• Sendemittel zum Senden der genannten Informationen an den suchenden Teilnehmer (SB).

11. Programmmodul zum Ablauf in einem Diensterechner (WS) zur Organisation von Begegnungen für Teilnehmer (SA, SB, SC) eines Kommunikationsnetzes (TN, INT) zur Steuerung der folgenden Schritte:
• Empfang eines Begegnungswunschs eines suchenden Teilnehmers (SB),
• Ermittlung von passenden gespeicherten Begegnungsangeboten zu diesem Begegnungswunsch,
• Übermittlung einer Information über mindestens ein Begegnungsangebot mit einer aktuellen Information über Teilnehmer dieser Begegnung für welche Meldungen vorliegen an den suchenden Teilnehmer (SB) und
• Empfang und Speicherung von Meldungen, insbesondere von Teilnahmezusagen, der Teilnehmers (SA, SB).
